# FASCICULE DE BREVET EUROPEEN

(11) **EP 3 868 592 B1**
(45) Date de publication et mention de la délivrance du brevet: **02.11.2022**
(21) Numéro de dépôt: 21157761.4
(22) Date de dépôt: 18.02.2021
(51) Int. Cl.: B60K 15/03, B60K 15/063, B60K 15/07, B65F 3/00

(54) **VEHICULE D'ENTRETIEN DE VOIRIES EQUIPE D'UN DISPOSITIF DE STOCKAGE DE GAZ NATUREL POUR VEHICULE**
STRASSENWARTUNGSFAHRZEUG MIT EINEM ERDGASTANK FÜR DAS FAHRZEUG
ROAD MAINTENANCE VEHICLE PROVIDED WITH A DEVICE FOR STORING NATURAL GAS FOR A VEHICLE

(30) Priorité: 19.02.2020 FR 2001670
(43) Date de publication de la demande: 25.08.2021
(73) Titulaire: Euro Investissement, 15000 Aurillac (FR)
(72) Inventeur: LAFON, Guy, 15800 VIC UR CERE (FR)
(74) Mandataire: Dennemeyer & Associates S.A.

(56) Documents cités:
- JP-A- 2016 210 593
- US-A1- 2012 280 481

## Description

La présente invention concerne un véhicule d'entretien de voiries équipé d'un dispositif de stockage de gaz naturel pour. Ici, l'expression « véhicule d'entretien de voiries » désigne essentiellement des balayeuses automotrices, des balayeuses/laveuses ou tout autre véhicule destinés à enlever les déchets des voiries et à nettoyer ces dernières.

L'expression « Gaz Naturel pour Véhicule « est souvent employée sous son acronyme GNV ou NGV en anglais. Par la suite, pour faciliter la lecture, l'acronyme GNV sera préférentiellement utilisé. Le GNV est un carburant pour véhicule constitué majoritairement, à plus de 95%, de méthane. Ce méthane provient non seulement de l'industrie gazière exploitant de gisements fossiles mais également, et de plus en plus, d'installations de méthanisation. Dans ce dernier cas, on parle de biogaz ou de bio-méthane. Les installations de méthanisation assurent le traitement des ordures ménagères, des déchets agricoles et des boues d'épuration. Outre son intérêt dans le cadre de la valorisation des déchets, le bio-méthane, et par la même le GNV lorsqu'il est utilisé comme carburant, génère des émissions de CO2 réduites d'environ 25% par rapport à l'essence. L'oxyde d'azote est réduit de 70% par rapport à l'essence et le GNV ne génère pas- ou peu- de particules.

Il existe donc un intérêt à équiper les véhicules avec un moteur fonctionnant au GNV, afin de respecter la réglementation anti-pollution et réduire l'impact de la circulation des véhicules sur l'environnement. Du fait du nombre encore limité de stations-services distribuant du GNV, ce type de carburant est surtout utilisé pour des véhicules utilitaires de flotte captive. On désigne par cette expression des véhicules qui en fin de service, en général en fin de journée, regagne leur lieu de garage. Ces véhicules circulent globalement toujours sur les mêmes voies de circulation, publiques ou privées, en effectuant des trajets prédéfinis et/ou répétitifs, cela dans un rayon limité autour de leur garage. Tous ces véhicules d'entretien de voierie nécessitent une puissance importante, non seulement compte tenu de leur poids total roulant mais également afin de faire fonctionner les différents outils dont ils sont équipés. Il existe donc un besoin pour équiper de tels véhicules avec une réserve en GNV suffisante pour effectuer, si besoin sur plusieurs jours, les taches octroyées à de tels véhicules. On connait par US-A-2012/280481 un véhicule de ramassage des ordures ménagères dont la partie haute de la benne est occupée par un compartiment recevant des réservoirs de GNV. Une telle solution diminue de facto le volume utile de la benne.

Ces véhicules opèrent en zone urbaine ou péri-urbaine. Ils doivent donc pourvoir circuler sur des voies de tailles limitées, notamment en hauteur. Compte tenu du nombre de véhicules concernés, du prix d'achat par véhicule, un remplacement par du matériel neuf spécifiquement conçu pour fonctionner au GNV représente souvent un budget important pour les possesseurs de tels engins.

Une solution alternative consiste à transformer les véhicules existant pour qu'ils fonctionnent au GNV. Dans ce contexte, il est donc intéressant de disposer d'une réserve en GNV aisée à installer sur des véhicules fonctionnant avec des carburants, essence ou diesel, offrant une autonomie suffisante et cela sans modifier sensiblement le volume utile de tels véhicules.

C'est à ce besoin que se propose de remédier l'invention en proposant un dispositif de stockage de GNV aisé à installer, adaptable aux véhicules existants et ne modifiant pas le volume utile ni le fonctionnement du véhicule.

A cet effet, l'invention a pour objet un véhicule d'entretien de voirie de type balayeuse équipé d'un dispositif de stockage de Gaz Naturel pour Véhicule (GNV), ledit véhicule comportant au moins une benne de réception des déchets collectés lors de l'entretien de la voirie par le véhicule, un moteur et une cabine de conduite du véhicule, la paroi supérieure ou toit de la benne étant à une hauteur inférieure à celle de la paroi supérieure ou toit de la cabine, caractérisé en ce que le dispositif de stockage de GNV comprend un châssis métallique, configuré en quadrilatère à angles droits, au moins trois réservoirs cylindriques à base circulaire fixés de manière amovible sur le châssis, au moins un organe de blocage en position du châssis sur une partie de la paroi supérieure ou toit de la benne du véhicule d'entretien de voirie et un organe de raccordement amovible desdits réservoirs au moteur du véhicule et en ce que la hauteur du châssis avec les réservoirs est inférieure à 1,5 la différence de hauteur entre la paroi supérieure ou toit de la cabine et celle de la paroi supérieure ou toit de la benne, la différence de hauteur étant une hauteur dite utile définie selon la relation H1 < H6 + (1,5*H) avec H1 la hauteur maximale du véhicule et H6 la hauteur de la cabine.

L'invention permet ainsi d'équiper aisément un véhicule, en optimisant la place disponible dans ce dernier et sans modification substantielle nécessitant un nouvel agrément du véhicule.

Selon des aspects avantageux mais non obligatoires de l'invention, un tel procédé peut comprendre une ou plusieurs des étapes suivantes:

la hauteur du toit de la cabine du véhicule est comprise entre 2,60 m et 2,70m.

Le châssis est équipé de quatre réservoirs identiques positionnés sur des berceaux orientés parallèlement à la largeur du véhicule.

Un capot recouvre complètement le châssis équipés des réservoirs.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig. 1] est une vue simplifiée et partielle, en perspective, d'un véhicule équipé d'un dispositif conforme à un mode de réalisation de l'invention, une partie étant représentée en pointillés
[Fig. 2] est une vue latéral et partiellement en pointillés, à plus grande échelle, d'une partie du véhicule de la figure 1,
[Fig. 3] est une vue en perspective, à plus grande échelle du dispositif seul et
[Fig. 4] est une vue simplifiée latérale du véhicule de la figure 1, avec un capot de protection.

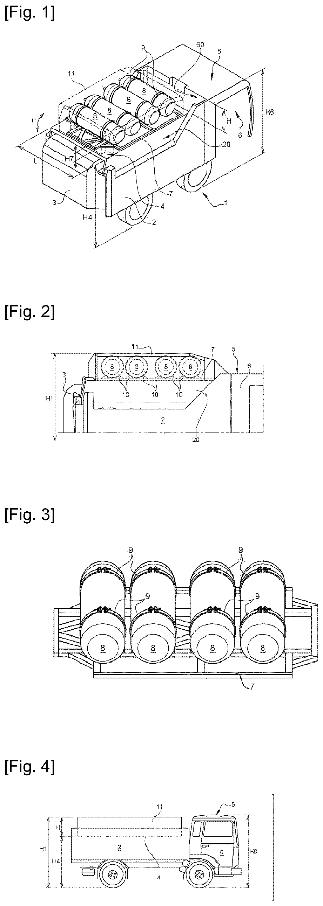

La figure 1 illustre un véhicule 1. Le véhicule 1, ici à titre d'illustration, est un véhicule d'entretien de voirie de type balayeuse. En variante, il s'agit d'un autre type de véhicule d'entretien de voirie, par exemple une laveuse ou autre. Seuls les éléments concernés par l'invention sont ici illustrés, de manière schématique et simplifiée afin de faciliter la lecture. Le véhicule 1 comprend une benne 2 de réception de déchets collectés lors du passage du véhicule 1 sur une voie de circulation, pour l'entretien de cette dernière. La benne 2 est équipée d'une paroi arrière mobile et définissant une porte d'accès 3 à l'intérieur de la benne 2. La porte 3 est montée pivotante dans un plan vertical sur des charnières, non visibles, selon la double flèche F.

La paroi latérale 20 de la benne 2 s'étend au-dessus du toit 4, de sorte qu'une partie utile située sur le haut du véhicule 1 est délimitée par les parois latérales 20, le toit 4 et l'arrière 60 de la cabine 6 du véhicule 1.

La paroi supérieure ou toit 4 de la benne 2, en regardant la figure 1, est sensiblement plan. Le toit 4 se trouve à une altitude H4 inférieure à l'altitude H6 de la paroi supérieure ou toit 5 d'une cabine de conduite 6 du véhicule 1. En d'autres termes la hauteur maximale H1 du véhicule 1 est voisine, au sens de légèrement supérieure à plus ou moins 20 cm, à l'altitude H6 de la cabine de conduite 6 du véhicule 1. La différence de hauteur H entre les altitudes H4 et H6 des toits 4, 5 respectivement de la benne 2 et de la cabine 6 définit de facto une hauteur utile H pour un équipement logé sur le toit 4 de la benne 2, sans que cet équipement ne dépasse significativement la hauteur maximale H1 hors tout du véhicule 1. En l'espèce, compte tenu d'un coefficient de sécurité permettant au véhicule 1 de passer sous la plupart des ouvrages d'art, à savoir pont, tunnel et viaduc, on considère qu'une hauteur hors tout H1 inférieure ou égale à la hauteur H6 de la cabine augmentée au plus d'une fois et demie la hauteur utile H est une hauteur maximale hors tout admissible pour de tels véhicules 1. En d'autres termes la hauteur hors tout est définie par la relation : H1 < H6 + (1,5*H).

Une telle relation est applicable pour des véhicules dont la hauteur H6, donc l'altitude du toit 5 de la cabine 6 est comprise entre 2,60 m et 2,70 m. Dans tous les cas, quelle que soit la hauteur H1 du véhicule 1 ainsi équipé d'un châssis 7 avec des réservoirs 8, il n'y aucune modification du volume utile de la benne 2 ni des autres capacités d'emport d'équipement ou de fluides tels que des tuyaux, des lances de nettoyage, de l'eau, des produits de nettoyage ou autres.

Le châssis 7 avec les réservoirs 8 a une hauteur H7 adaptée pour que cette hauteur H7 reste inférieure à 1,5 fois la hauteur utile H. En d'autres termes, la hauteur H7 du châssis 7 est telle que la relation définissant la hauteur maximale H1 par rapport à la hauteur H6 du toit 5 de la cabine 6, comme mentionné précédemment est toujours vérifiée.

Le châssis 7 reçoit au moins trois réservoirs 8, ici quatre réservoirs 8 identiques. En variante le nombre et/ou la contenance de chaque réservoir sont différents. Les réservoirs 8 sont des réservoirs de stockage de Gaz Naturel pour Véhicule (GNV) sous pression, donc sous forme liquéfiée. En l'espèce, il s'agit de réservoirs 8 de 150 litres chacun, sous une pression d'environ 200 bars, soit une masse total de GNV voisine de 90 kg, ce qui permet un fonctionnement du véhicule compris entre 7 heures et 10 heures, selon son activité.

Les réservoirs 8 sont disposés parallèlement à la largeur L du toit 4, donc parallèlement à la largeur du véhicule 1. En variante, ils sont disposés perpendiculairement à la largeur L du toit 4 du véhicule 1. Ici, quel que soit leur nombre et leur disposition, les réservoirs 8 sont disposés en une seule couche : il n'y a pas empilement de réservoirs 8 sur le toit 4. Dans un autre mode de réalisation de l'invention, soit avec des réservoirs plus petits et/ou avec une hauteur H plus importante, les réservoirs sont sur plusieurs niveaux dans le châssis 7. La fixation des réservoirs 8 sur le châssis 7 est assurée, avantageusement de manière amovible, par des sangles 9, particulièrement visible à la figure 3. Il s'agit, par exemple, de sangles métalliques à cliquet. Afin de sécuriser la fixation de réservoirs 8 et d'éviter tout déplacement accidentel de ces derniers, ils reposent sur des berceaux 10, illustrés schématiquement à la figure 2.

Les réservoirs 8 sont avantageusement reliés entre eux et à un organe de raccordement, de type lyre, connu en soi et non illustré pour plus de lisibilité. Cet organe de raccordement est lui-même relié au moteur du véhicule 1, situé généralement en partie basse du véhicule 1, par exemple sous la cabine 6. Cet organe de raccordement assure l'arrivée en GNV au moteur depuis les réservoirs. Ces derniers étant sous pression, un organe de détente est prévu en aval de la lyre.

le châssis 7 est lui-même maintenu, avantageusement de manière amovible, sur le toit 4 de la benne 2 par un organe de blocage en position, connu en soi et formé par des fixations de type boulon, non illustré pour plus de lisibilité. En variante, il s'agit de fixation de type cliquets, brides, attaches rapides ou autres. Avantageusement, un dispositif de verrouillage, à clés ou à code, est prévu afin d'éviter tout détachement non désiré, accidentel ou non, du châssis 7 du toit 4.

Comme cela ressort de la figure 2, un capot 11 couvre le châssis et les réservoirs 8. Le capot 11 est avantageusement verrouillable et manœuvrable, pour son ouverture et sa fermeture, à partir de la cabine 6. Il a pour fonction de protéger les réservoirs 8 et le châssis 7 des chocs, d'actes de vandalisme et également des aléas météorologiques. En variante, le capot 11 est réalisé en un matériau isolant.

## Revendications

1. Véhicule (1) d'entretien de voirie de type balayeuse équipé d'un dispositif de stockage (7, 8) de Gaz Naturel pour Véhicule (GNV), ledit véhicule (1) comportant au moins une benne (2) de réception des déchets collectés lors de l'entretien de la voirie par le véhicule (1), un moteur et une cabine de conduite (6) du véhicule (1), la paroi supérieure ou toit (4) de la benne (2) étant à une hauteur (H4) inférieure à celle (H6) de la paroi supérieure ou toit (5) de la cabine (6), **caractérisé en ce que** le dispositif de stockage de GNV (7, 8) comprend un châssis métallique, (7) configuré en quadrilatère à angles droits, au moins trois réservoirs (8) cylindriques à base circulaire fixés de manière amovible sur le châssis (7), au moins un organe de blocage en position du châssis sur une partie de la paroi supérieure ou toit (4) de la benne (2) du véhicule (1) d'entretien de voirie et un organe de raccordement amovible desdits réservoirs au moteur du véhicule et **en ce que** la hauteur (H7) du châssis (7) avec les réservoirs (8) est inférieure à 1,5 fois la différence de hauteur (H) entre la paroi supérieure ou toit (5) de la cabine (6) et celle de la paroi supérieure ou toit (4) de la benne (2), la différence de hauteur (H) étant une hauteur dite utile définie selon la relation H1 < H6 + (1,5*H) avec H1 la hauteur maximale du véhicule (1) et H6 la hauteur de la cabine (6).

2. Véhicule selon la revendication 1, **caractérisé en ce que** la hauteur (H6) du toit (5) de la cabine (6) du véhicule (1) est comprise entre 2,60 m et 2, 70 m.

3. Véhicule selon la revendication 1, **caractérisé en ce que** le châssis (7) est équipé de quatre réservoirs (8) identiques positionnés sur des berceaux (10) orientés parallèlement à la largeur (L) du véhicule (1).

4. Véhicule selon l'une des revendications précédentes, **caractérisé en ce qu'**un capot (11) recouvre complètement le châssis (7) équipés des réservoirs (8).

## Patentansprüche

1. Straßenwartungsfahrzeug (1) vom Typ Straßenkehrmaschine, das mit einer Lagervorrichtung (7, 8) für Erdgas für Fahrzeuge (CNG) ausgestattet ist, wobei das Fahrzeug (1) mindestens einen Container (2) zur Aufnahme von Abfall, der bei der Straßenwartung von dem Fahrzeug (1) gesammelt wird, einen Motor und eine Fahrerkabine (6) des Fahrzeugs (1) umfasst, wobei die obere Wand oder das Dach (4) des Containers (2) in einer Höhe (H4) liegt, die kleiner ist als diejenige (H6) der oberen Wand oder des Dachs (5) der Kabine (6), **dadurch gekennzeichnet, dass** die Lagervorrichtung für CNG (7, 8) einen Metallrahmen (7), der als ein rechtwinkeliges Viereck konfiguriert ist, mindestens drei zylindrische Behälter (8) mit Kreisbasis, die abnehmbar an dem Rahmen (7) befestigt sind, mindestens ein Organ zum Blockieren in Position des Rahmens auf einem Teil der oberen Wand oder des Dachs (4) des Containers (2) des Straßenwartungsfahrzeugs (1) und ein abnehmbares Anschlussorgan der Behälter an dem Motor des Fahrzeugs umfasst, und dass die Höhe (H7) des Rahmens (7) mit den Behältern (8) kleiner ist als das 1,5-Fache des Unterschieds der Höhe (H) zwischen der oberen Wand oder dem Dach (5) der Kabine (6) und der oberen Wand oder dem Dach (4) des Containers (2), wobei der Höhenunterschied (H) eine so genannte Nutzhöhe ist, die gemäß der Beziehung H1 < H6 + (1,5*H) definiert ist, wobei H1 die maximale Höhe des Fahrzeugs (1) ist und H6 die Höhe der Kabine (6) ist.

2. Fahrzeug nach Anspruch 1, **dadurch gekennzeichnet, dass** die Höhe (H6) des Dachs (5) der Fahrerkabine (6) des Fahrzeugs (1) zwischen 2,60 m und 2,70 m liegt.

3. Fahrzeug nach Anspruch 1, **dadurch gekennzeichnet, dass** der Rahmen (7) mit vier identischen Behältern (8) ausgestattet ist, die auf Gestellen (10), die parallel zu der Breite (L) des Fahrzeugs (1) ausgerichtet sind, positioniert sind.

4. Fahrzeug nach einem der vorstehenden Ansprüche, **dadurch gekennzeichnet, dass** eine Haube (11) den Rahmen (7), der mit den Behältern (8) ausgestattet ist, vollständig abdeckt.

## Claims

1. A sweeper-type road maintenance vehicle (1) provided with a device (7, 8) for storing natural gas for a vehicle (NGV), said vehicle (1) comprising at least one bin (2) for receiving waste collected during road maintenance by the vehicle (1), an engine and a driver's cab (6) of the vehicle (1), the top wall or roof (4) of the bin (2) being at a lower height (H4) than that (H6) of the top wall or roof (5) of the cab (6), **characterised in that** the device for storing NGV (7, 8) comprises a metal frame (7) configured as a right-angled quadrilateral, at least three cylindrical tanks (8) with a circular base removably attached to the frame (7), at least one member for locking the frame in position on a part of the top wall or roof (4) of the bin (2) of the road maintenance vehicle (1) and a member for removable connection of said tanks to the engine of the vehicle, and **in that** the height (H7) of the frame (7) with the tanks (8) is less than 1.5 times the difference in height (H) between the top wall or roof (5) of the cab (6) and that of the top wall or roof (4) of the bin (2), the difference in height (H) being a so-called useful height defined according to the relation H1 < H6 + (1.5^{*}H) with H1 the maximum height of the vehicle (1) and H6 the height of the cab (6).

2. The vehicle according to claim 1, **characterised in that** the height (H6) of the roof (5) of the cab (6) of the vehicle (1) is between 2.60 m and 2.70 m.

3. The vehicle according to claim 1, **characterised in that** the frame (7) is provided with four identical tanks (8) positioned on cradles (10) oriented parallel to the width (L) of the vehicle (1).

4. The vehicle according to one of the preceding claims, **characterised in that** a hood (11) completely covers the frame (7) provided with the tanks (8).
